# EUROPEAN PATENT APPLICATION

(11) **EP 4 510 535 A1**
(43) Date of publication of application: **19.02.2025**
(21) Application number: 23799595.6
(22) Date of filing: 18.04.2023
(51) Int. Cl.: H04L 65/40, H04L 65/1069, H04L 65/1108, H04L 65/80

(54) **METHOD AND APPARATUS FOR PROVISIONING REAL-TIME COMMUNICATION SERVICE IN WIRELESS COMMUNICATION SYSTEM**

(30) Priority: 04.05.2022 KR 20220055550
(71) Applicant: Samsung Electronics Co., Ltd., Suwon-si, Gyeonggi-do 16677 (KR)
(72) Inventor: YANG, Hyunkoo, Suwon-si Gyeonggi-do 16677 (KR); LEE, Hakju, Suwon-si Gyeonggi-do 16677 (KR)
(74) Representative: Nederlandsch Octrooibureau
(86) International application number: PCT/KR2023/005212
(87) International publication number: WO 2023/214712

(57) **Abstract**

The present disclosure relates to a 5G or 6G communication system for supporting a higher data transmission rate. The present disclosure provides a method for supporting a real-time communication service between first UE and second UE in a real-time communication application function (AF) of a data network, the method comprising the steps of: establishing a real-time communication control session with the first UE; receiving a request for a quality of service (QoS) configuration from a real-time communication web server function (WSF) that provides the real-time communication service to the first UE and the second UE; and establishing a real-time communication control session with the second UE, wherein the request for the QoS configuration is generated on the basis of a media description offer received from the first UE.

## Description

### [Technical Field]

The disclosure relates to a method and device for providing a real-time communication service in a wireless communication system, and relates to a method and device for ensuring the quality of a real-time communication in a wireless network such as 5G.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Mode for Carrying out the Invention]

### [Technical Problem]

With the development of wireless communication systems, various services may be provided and, thus, a method for effectively providing such services is required. In particular, a method for efficient real-time media transmission for voice and video calls is required.

The disclosure provides a device and method capable of effectively providing a real-time communication service in a wireless communication system.

### [Technical Solution]

The disclosure proposes a method for supporting a real-time communication service between a first UE and a second UE in a real-time communication application function (AF) of a data network, comprising: establishing a real-time communication control session with the first UE, receiving, from a real-time communication web server function (WSF) providing the real-time communication service to the first UE and the second UE, a request for a quality of service (QoS) configuration, and establishing a real-time communication control session with the second UE, wherein the request for the QoS configuration is generated based on a media description offer received from the first UE.

The disclosure proposes a method for supporting a real-time communication service between a first UE and a second UE in a real-time communication web server function (WSF) of a data network, comprising: receiving, from the first UE, a media description offer requesting the real-time communication service with the second UE, and transmitting, to the second UE, the media description offer, transmitting, to a real-time communication application function (AF), a request for a quality of service (QoS) configuration based on the media description offer, and receiving, from the second UE, a media description answer to the media description offer and transmitting, to the first UE, the media description answer.

The disclosure proposes a method by a first UE performing a real-time communication service with a second UE, comprising establishing a real-time communication control session with a real-time communication application function (AF) of a data network, transmitting a request for a quality of service (QoS) to the real-time communication AF, transmitting, to a real-time communication web server function (WSF) of the data network, a media description offer requesting the real-time communication service with the second UE, and receiving, from the real-time communication WSF, a media description answer to the media description offer, wherein the request for the QoS configuration is generated based on the media description offer.

The disclosure proposes a real-time communication application function (AF) device of a data network supporting a real-time communication service between a first UE and a second UE , comprising a transceiver, and a controller controlling the transceiver to establish a real-time communication control session with the first UE, receive, from a real-time communication web server function (WSF) providing the real-time communication service to the first UE and the second UE, a request for a quality of service (QoS) configuration and establish a real-time communication control session with the second UE, wherein the request for the QoS configuration is generated based on a media description offer received from the first UE.

The disclosure proposes a real-time communication web server function (WSF) device of a data network supporting a real-time communication service between a first UE and a second UE, comprising a transceiver, and a controller controlling the transceiver to: receive, from the first UE, a media description offer requesting the real-time communication service with the second UE and transmit, to the second UE, the media description offer, transmit, to a real-time communication application function (AF), a request for a quality of service (QoS) configuration based on the media description offer, and receive, from the second UE, a media description answer to the media description offer and transmit, to the first UE, the media description answer.

The disclosure proposes a first UE performing a real-time communication service with a second UE, comprising a transceiver and a controller controlling the transceiver to establish a real-time communication control session with a real-time communication application function (AF) of a data network, transmit a request for a quality of service (QoS) to the real-time communication AF, transmit, to a real-time communication web server function (WSF) of the data network, a media description offer requesting the real-time communication service with the second UE, and receive, from the real-time communication WSF, a media description answer to the media description offer, wherein the request for the QoS configuration is generated based on the media description offer.

The disclosure proposes a method for providing a real-time communication service, comprising negotiating media configuration information between UEs participating in a real-time communication service, transferring the media configuration information to a 5G RTC AF, sending, by the 5G RTC AF, a request for a quality of service (QoS)-related policy configuration to a PCF based on the media configuration information, and generating a media session between the UEs participating in the real-time communication service based on the QoS-related policy.

### [Advantageous Effects]

An embodiments of the disclosure provides a device and method capable of effectively providing a real-time communication service in a mobile communication system.

According to an embodiment of the disclosure, it is possible to set QoS for media traffic of a real-time communication service by providing media traffic of a real-time communication service and QoS-related information about the traffic to the wireless communication system.

Effects of the disclosure are not limited to the foregoing, and other unmentioned effects would be apparent to one of ordinary skill in the art from the following description.

### [Brief Description of Drawings]

FIG. 1 illustrates a 5G system structure for a real-time communication service in a wireless communication system according to various embodiments of the disclosure;
FIG. 2 illustrates a media architecture for a real-time service according to an embodiment of the disclosure;
FIG. 3 illustrates a process for providing a real-time communication service between two UEs in a wireless communication system according to an embodiment of the disclosure;
FIG. 4 illustrates a provisioning process for providing a real-time communication service in a wireless communication system according to an embodiment of the disclosure;
FIG. 5 illustrates a server-based QoS configuration procedure in a wireless communication system according to an embodiment of the disclosure;
FIG. 6 illustrates a client-based QoS configuration procedure in a wireless communication system according to an embodiment of the disclosure;
FIG. 7 is a view illustrating a real-time communication supporting method of an RTC AF according to an embodiment of the disclosure;
FIG. 8 is a view illustrating a real-time communication supporting method of an RTC WSF according to an embodiment of the disclosure;
FIG. 9 is a view illustrating a real-time communication service performing method of a first UE according to an embodiment of the disclosure;
FIG. 10 is a view illustrating a configuration of a network function device according to an embodiment of the disclosure; and
FIG. 11 is a view illustrating a configuration of a UE according to an embodiment of the disclosure.

### [Mode for Carrying out the Invention]

Hereinafter, the operational principle of the disclosure is described below with reference to the accompanying drawings. When determined to make the subject matter of the present disclosure unclear, the detailed of the known functions or configurations may be skipped. The terms as used herein are defined considering the functions in the present disclosure and may be replaced with other terms according to the intention or practice of the user or operator. Therefore, the terms should be defined based on the overall disclosure.

For the same reasons, some elements may be exaggerated or schematically shown. The size of each element does not necessarily reflects the real size of the element.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

When determined to make the subject matter of the disclosure unnecessarily unclear, the detailed description of known functions or configurations may be skipped in describing embodiments of the disclosure. Hereinafter, the disclosure is described in detail with reference to the accompanying drawings.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited by the terms, and such terms may be replaced with other terms denoting objects with equivalent technical concept.

The terms as used herein are provided merely to describe some embodiments thereof, but not to limit the scope of other embodiments of the present disclosure. It is to be understood that the singular forms "a," "an," and "the" include plural references unless the context clearly dictates otherwise. The terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

Methods described below in connection with embodiments are based on hardware. However, embodiments of the disclosure encompass technology using both hardware and software and thus do not exclude software-based methods.

For convenience, the terms and names defined in the latest 3rd generation partnership project (3GPP) LTE and new radio (NR) standards among the current communication standards are used herein. However, the disclosure is not limited by such terms and names and may be likewise applicable to systems conforming to other standards. For example, the disclosure may be applied to 3GPP NR (5th generation mobile communication standards). The embodiments of the disclosure may also apply to other communication systems with similar technical background or channel form. Further, embodiments of the present invention may be modified in such a range as not to significantly depart from the scope of the present invention under the determination by one of ordinary skill in the art and such modifications may be applicable to other communication systems.

When the mobile communication operator (the wireless communication system of the mobile communication operator) is unable to grasp service configuration information including media information in a wireless communication system supporting a real-time communication (RTC) service, i.e., when treating media streams with different transmission characteristics (traffic characteristics) as a single service stream, the network resources used for the service stream may be optimized in terms of each media stream. If the service configuration information including media information may not be grasped by the mobile communication operator, and thus, the media streams having different transmission characteristics are treated as one service stream, media quality deterioration or network resource waste inevitably occurs. Thus, the disclosure describes a technology for enhancing media quality and saving network resources by allowing service configuration information including media information to be utilized in a wireless communication system (e.g., a 5G core network (CN)).

In a real-time communication service system, a UE may negotiate service configuration information including media information with another UE through a web server (e.g., a real-time WSF) provided by a real-time communication application provider, and establish a real-time communication media session between UEs based on the negotiated service configuration information to exchange media data such as voice or video in real time.

In order to provide a real-time communication service, the 5G system may include a new generation-radio access network (NG-RAN) and a user plane function (UPF) in a communication path of the real-time communication media session between the UEs.

A real-time communication (RTC) service may include media having various transmission characteristics such as voice, image, and text, and media for a current real-time communication service are treated as a best effort (BE) service in which quality of service (QoS) is not guaranteed. If treated as a BE service, there is a high possibility that the quality of the service will deteriorate. However, in the conventional real-time communication system, there is no means capable of providing identification information about the media having the various transmission characteristics and corresponding QoS information to the wireless communication system, and thus the QoS of the media may not be managed.

In a typical server-based media distribution service, the wireless communication system may preset the address of the server and codec-related information. On the other hand, in the real-time communication service, the wireless communication system may know the address of the participating UE only when the service is started, and codec and media-related parameters are also determined by negotiation between the two UEs when the service is started, and thus may not be preset. Accordingly, dynamic service UE and QoS management are required for the real-time communication service. The disclosure is to meet these needs.

Therefore, the disclosure provides a method for ensuring QoS of real-time communication service traffic. More particularly, the disclosure proposes a method for identifying information for identifying uplink and downlink traffic of both UEs and transmission characteristics for each media, and providing the identified information to a wireless communication system. Since the information for identifying the traffic and the transmission characteristic information for each media are provided to the wireless communication system, it is possible to dynamically manage a service UE and a QoS in the wireless communication system. Specifically, the disclosure allows a wireless communication system (e.g., PCF or NEF of 5G CN) to request QoS configuration through a real-time communication application function (AF) or a real-time communication web server function (WSF).

The device and method according to various embodiments of the disclosure, described below, makes it possible to provide QoS considering media characteristics when real-time communication service providers provide a real-time service in a 5G system (5GS).

Effects obtainable from the disclosure are not limited to the above-mentioned effects, and other effects not mentioned may be apparent to one of ordinary skill in the art from the following description.

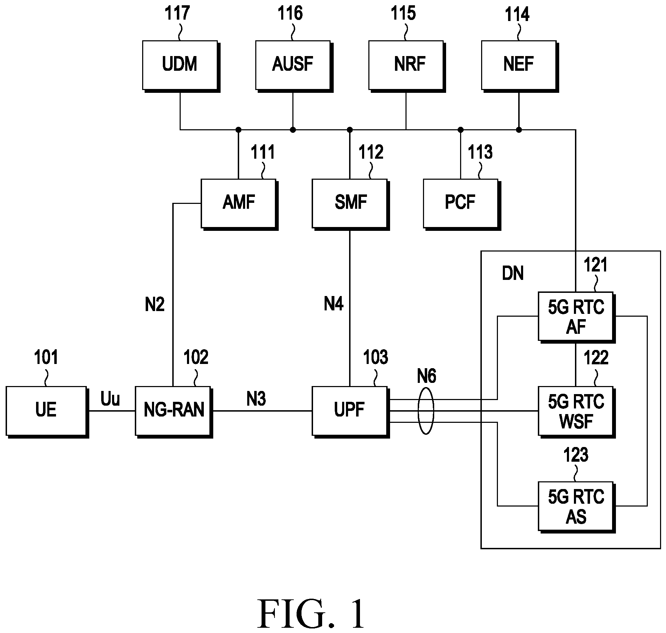

FIG. 1 illustrates a 5G system structure for a real-time communication service in a wireless communication system according to various embodiments of the disclosure.

The 5G system according to an embodiment of the disclosure may include a 5G real-time communication application function 121 (5G RTC AF). Referring to FIG. 1, a system may include at least one of a user equipment (UE) 101, an NG-RAN 102 which is a base station, a user plane function (UPF) 103, an access and mobility management function (AMF) 111, a session management function (SMF) 112, a policy control function (PCF) 113, a network exposure function (NEF) 114, an NF repository function (NRF) 115, an authentication server function (AUSF) 116, a unified data management (UDM) 117, the 5G RTC AF 121, and a 5G real-time communication web server function (5G RTC WSF) 122. Optionally, the system may further include a 5G real-time communication application server (5G RTC AS) 123. Of course, without limitations thereto, the 5GS may include fewer or more components than the components illustrated in FIG. 1. Further, each component may be referred to as a network entity, a network function (NF), or a network function device.

Each of network functions (NFs) of the 5GS illustrated in FIG. 1 is described as one "network entity" or one "network function". However, an NF or NF device may be implemented in one or more specific servers, or two or more NFs may be implemented in one server. For example, the 5G RTC AF 121 may be implemented in the 5G RTC WSF 122.

Further, according to an embodiment of the disclosure, one NF or two or more NFs may be implemented in the form of one network slice in some cases. Network slices may be generated based on a specific purpose. For example, the network slice may be configured to provide the same type of service to a specific subscriber group (e.g., a subscriber group for providing a maximum transmission rate, data usage, a guaranteed minimum transmission rate, etc.). Further, the network slice may be implemented according to various purposes. As making the gist of the disclosure unclear, a more detailed description of the network slice is omitted.

Referring to FIG. 1, FIG. 1 illustrates an interface between nodes. A Uu interface may be used between the UE 101 and the NG-RAN 102, an N2 interface between the NG-RAN 102 and the AMF 111, an N3 interface between the NG-RAN 102 and the UPF 103, and an N4 interface between the SMF 112 and the UPF 103 may be used, and an N6 interface may be used between the UPF 103 and the 5G RTC AF 121, the 5G RTC WSF 122, or the 5G RTC AS 123 positioned in the data network DN. Since the above-described interfaces are defined in the NR standard, descriptions thereof are omitted. The interface between the 5G RTC AF 121, the 5G RTC WSF 122, the 5G RTC AS 123, and the UE is described in the media architecture to be described below.

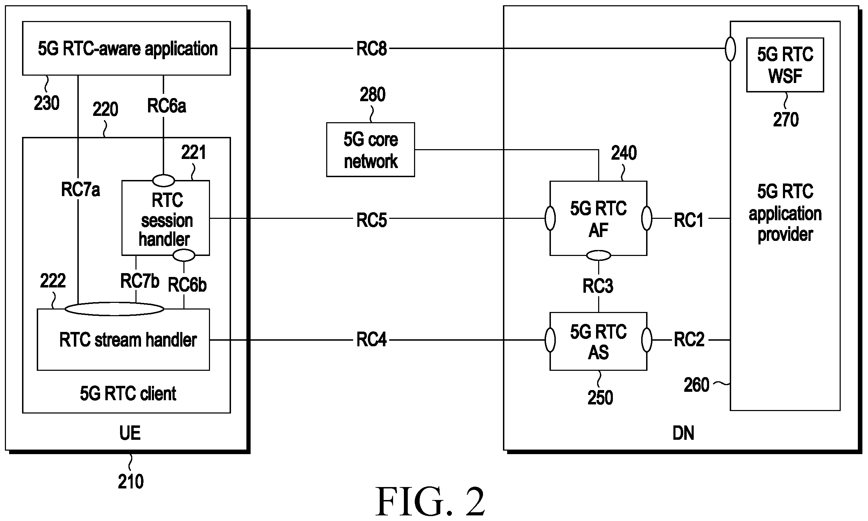

FIG. 2 is a view illustrating a media architecture for a real-time service according to an embodiment of the disclosure. The media architecture represents a relationship between logical functions inside the UE and the network functions related thereto.

Referring to FIG. 2, the UE 110 may include a 5G RTC client 120 and a 5G RTC-aware application (5G RTC-a application or 5GRa application) 230. Hereinafter, an application may be referred to as an 'app'.

The 5G RTC client is a UE internal function for a real-time communication service according to an embodiment of the disclosure. The 5G RTC client is a logical function, and its detailed functions may be implemented in devices distributed inside the UE according to implementation selection. The 5G RTC client 220 may include an RTC session handler 221 and an RTC stream handler 222. The RTC session handler may perform a function for controlling an RTC media session by communicating with the 5G RTC AF 240 on the DN. The RTC stream handler may perform a function of transmitting/receiving media content by communicating with another UE participating in the real-time communication service or the 5G RTC AS 250 on a DN.

The data network (DN) may be a data network directly controlled by a mobile communication operator or a data network on a general Internet domain.

The 5G RTC-aware application 230 is an application program provided by the 5G RTC application provider 260, and may provide a real-time communication service to the UE 210 by controlling the 5G RTC client 120. For example, the 5G RTC-aware application 230 may be downloaded when accessing the 5G RTC WSF 270 provided by the 5G real-time communication (RTC) application provider 260, or may be mounted in advance (e.g., when the product is released) on the UE 210. Thereafter, in an embodiment of the disclosure, it is assumed that the 5G RTC client 220 is present in the UE 210, and UEs participating in the real-time communication service have the same 5G RTC-aware application.

FIG. 2 illustrates interfaces RC1, RC2, ... between the nodes, and the ellipse connecting the node and the interface means that the node provides an application programming interface (API) for communication using the interface. Communication using the interfaces may include the following functions:
- RC1: Real-time service provisioning, dynamic policy invocation
- RC2: Content hosting
- RC3: A proxy for registration and de-registration of the 5G RTC AS, transfer of configuration information about the application hosted in the 5G RTC AS and communication with the 5GS
- RC4: Real-time media content streaming
- RC5: Dynamic policy invocation, QoS reporting, 5G RTC AS discovery
- RC6 (RC6a, RC6b): Data collection for performing RC5 function and propagation of function performance result. For example, transfer of the 5G RTC AS uniform resource locator (URL) obtained through RC5 to 5G RTC-aware application, or collection of data for QoS reporting from RTC stream handler
- RC7 (RC7a, RC7b): Data collection and result reporting for media streaming transmission/reception. For example, media pipeline connection with camera, microphone, or display, and packet loss rate reporting
- RC8: Delivery of application data for service progress. For example, user interaction

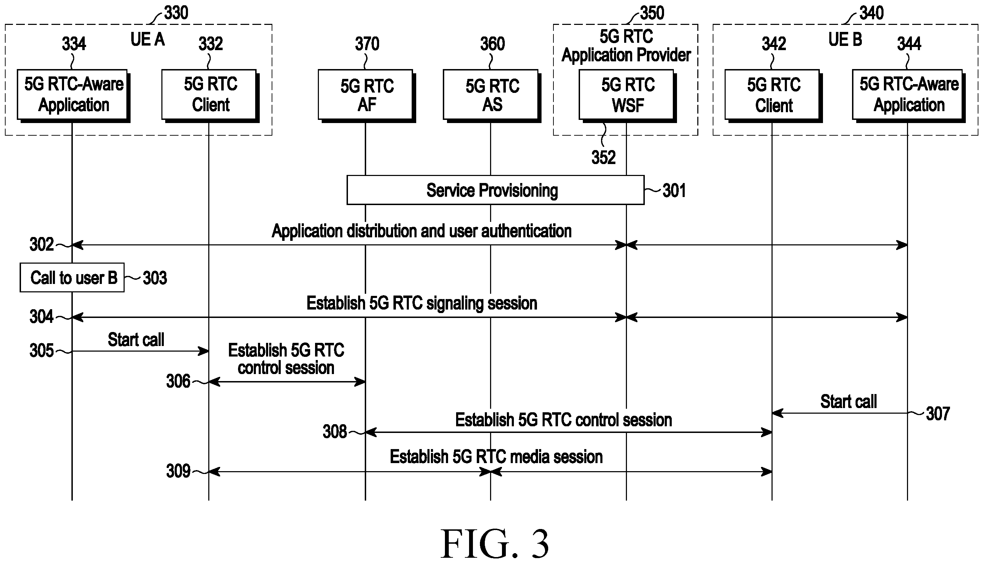

FIG. 3 illustrates a process for providing a real-time communication service between two UEs in a wireless communication system according to an embodiment of the disclosure.

Step 301 is a service provisioning process, and is a step in which the 5G real-time communication application provider 350 configures a 5G function required to provide a service. The configuration result may be configured as 5G RTC access information and may be shared with the 5G RTC AF 370 and the 5G real-time communication application provider 350, and may be transferred to the UEs 330 and 340 through the 5G RTC WSF 352 operated by the 5G real-time communication application provider or through the 5G RTC AF 370. Optionally, the 5G RTC AS 360 to be positioned in the media transmission path of the 5G real-time communication service may be configured in the service provisioning process 301. Details of the 5G RTC access information are described below.

In step 302, the UE A 330 or the UE B 340 may access the 5G RTC WSF 352 to download the 5G real-time aware application (5G RTCa application) and perform a UE authentication procedure. As described above, the 5G real-time communication aware application may have been previously installed in the UE A 330 or the UE B 340.

In step 303, the UE A 330 may request the UE B 340 to make a call through the 5G RTCa application 334.

The call request in step 303 is transferred to the 5G RTCa application 344 of the UE B 340 through the 5G RTC WSF 352 in step 304. In step 304, a 5G RTC signaling session via the 5G RTC WSF 352 may be established between the 5G RTCa applications 334 and 344 of the UE A 330 and the UE B 340. In other words, in operation 304, a request for establishing a 5G RTC signaling session may be transmitted from the UE A 330 to the UE B 340.

In step 305, the 5G RTCa application 334 of the UE A 330 may notify the 5G RTC client 332 of the start of the call service.

In step 306, the 5G RTC client 332 may establish a 5G RTC control session with the 5G RTC AF 370. Step 305 may be performed simultaneously with, or before, step 304.

In step 307, the 5G RTCa application 344 of the UE B 340 receiving the 5G RTC signaling session establishment request 304 may notify the 5G RTC client 342 of the UE B 340 of the start of the call service.

In step 308, the 5G RTC client 342 may establish a 5G RTC control session with the 5G RTC AF 370.

In step 309, a 5G RTC media session may be established between the 5G RTC client 332 of the UE A 330 and the 5G RTC client 342 of the UE B 340, and media data for a real-time call service may be exchanged. Optionally, the 5G RTC AS 360 may be positioned in the media transmission path of the real-time call service.

According to an embodiment of the disclosure, the 5G real-time communication service may be provided through the following session.
- 5G RTC signaling session: A session for exchanging service start information and service configuration information between 5G RTCa applications participating in the 5G real-time communication service. The service start information may include at least one of service participation availability of the counterpart UE and a transport layer address for transmitting/receiving signaling in the device in use. The service configuration information may include at least one of the media codec constituting the service, the bitrate, and the transport layer address for transmitting/receiving media. In the 5G RTC signaling operation according to an embodiment of the disclosure, both the service start information and the service configuration information may be exchanged in the 5G RTC signaling session establishment process. In the 5G RTC signaling operation according to another embodiment of the disclosure, at least one of the service start information and the service configuration information may be exchanged after the 5G RTC signaling session is established.
- 5G RTC control session: A session for communication between 5G RTC client and 5G RTC AF. Address information required for the 5G RTC client to access the 5G RTC AF may be provided to the 5G RTC client through the 5G RTCa application or by a separate method (e.g., through a control session established with the 5G RTC AF). According to an embodiment of the disclosure, the communication on the 5G RTC control session may be performed through an API provided by the 5G RTC AF, and the information about the API may be provided as 5G RTC access information. According to an embodiment of the disclosure, the 5G RTCa application may provide address information for obtaining the 5G RTC access information or the 5G RTC access information to the 5G RTC client.
- 5G RTC media session: A session for exchanging media data constituting a real-time communication service, according to an embodiment of the disclosure. The media transmission path of the 5G RTC media session is configured based on a result of negotiating service configuration information through the 5G RTC signaling session. In the real-time communication service according to an embodiment of the disclosure, a routing node and a QoS of the media transmission path may be established as a result of the request from the 5G RTC AF request to the 5G core network (CN). Optionally, the 5G RTC AS may be positioned in the media transmission path.

According to an embodiment of the disclosure, UEs participating in the real-time communication service are not required to communicate with one identical 5G RTC AF, but the UEs may communicate with different 5G RTC AFs. The UE may use the 5G function by transmitting a request to the 5G CN through the 5G RTC AF.

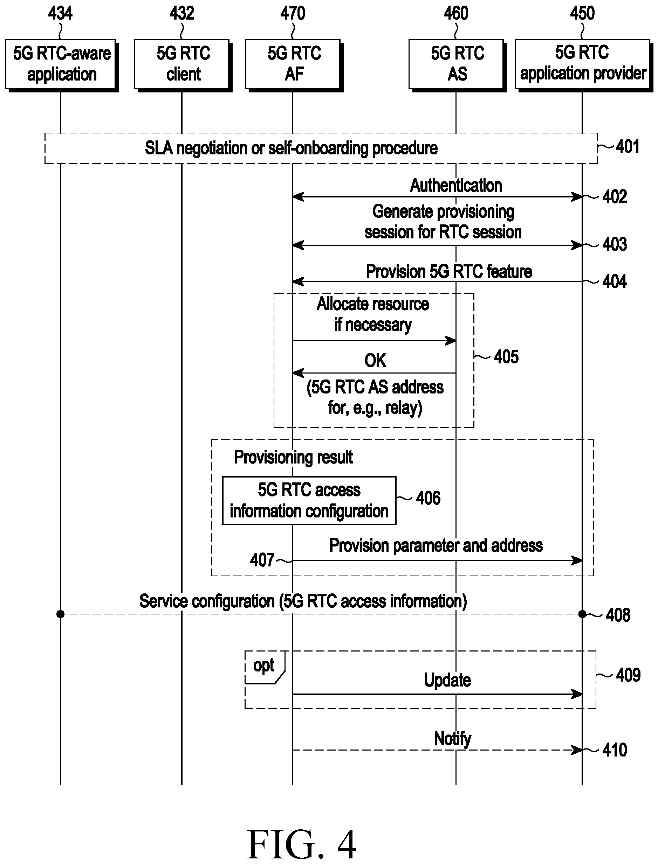

FIG. 4 illustrates a provisioning process for providing a real-time communication service in a wireless communication system according to an embodiment of the disclosure. For example, step 301 of FIG. 3 may be performed through at least one of the steps illustrated in FIG. 4.

In step 401, the 5G RTC application provider 450 agrees with the 5G network operator (mobile communication operator) to provide a 5G RTC application service and be allocated the access address (e.g., URL) of the 5G RTC AF 470 to perform provisioning. Step 401 may include a process in which the 5G RTC application provider discovers the 5G RTC AF. In this case, the UE may negotiate service configuration information including media information with another UE through the 5G RTC WSF provided by the 5G RTC communication application provider. Examples of the negotiation may include a service level agreement (SLA) negotiation or self-on-boarding procedure.

In step 402, the 5G RTC application provider 450 may perform an authentication procedure with the 5G RTC AF 470.

In step 403, the 5G RTC application provider 450 may establish a session for provisioning with the 5G RTC AF 470.

In step 404, the 5G RTC application provider 450 may select a function to be used in the 5G RTC application service, requesting provisioning from the 5G RTC AF 470. Specifically, the provisioning request may be to request the 5G RTC AF 470 to create a provisioning document including information about the resource to be used for accessing a specific RTC application service.

Optionally, when the provisioning request 404 includes the configuration of the 5G RTC AS 460, in step 405, the 5G RTC AF 470 may configure the 5G RTC AS 460 meeting the request. Specifically, the 5G RTC AF 470 may request the 5G RTC AS 460 to allocate resources, and the 5G RTC AS 460 may transmit an Ok message including the address of the 5G RTC AS 460 to the 5G RTC AF 470.

In step 406, the 5G RTC AF 470 may configure the result of processing the provisioning request 404 as 5G RTC access information.

In step 407, the 5G RTC AF 470 may provide the 5G RTC access information to the 5G RTC application provider 450.

In step 408, the 5G RTC application provider 450 may include the 5G RTC access information or information (e.g., URL) capable of obtaining the 5G RTC access information in a service configuration for the 5G RTCa application, and may transfer the same to the 5G RTCa application 434 of the UE.

After the above-described provisioning processes 401 to 408 are completed, an update may be optionally performed in step 409. For the update 409, at least one of the 5G RTC application provider identifier and the 5G RTC access information identifier may be allocated, and may be shared between the 5G RTC AF 470 and the 5G RTC application provider 450.

Optionally, in step 410, the 5G RTC AF 470 may notify the 5G RTC application provider 450 of an event or periodic report that occurs while providing the service. The specific method and content of the notification 410 may be performed (e.g., in an event triggering manner or periodically) based on the provisioning request 404 or the generated 5G RTC access information 406.

The 5G RTC access information according to an embodiment of the disclosure may include at least one of the following information:
- QoS policy-related information: Supportable QoS level or charging information, filter format for media stream identification (e.g., transmission/reception Internet protocol (IP) address, transmission/reception port number, transport protocol identifier), etc. A specific packet may be identified through the filter format for the media stream, and a QoS supportable for the identified packet may be specified.
- Quality report configuration information: Reporting server address, report format (e.g., Uri, MIME-type), reporting period, etc.
- Relay server configuration information: Maximum/minimum data rate, maximum/minimum number of media streams, maximum/minimum number of transmission/reception ports, supported transport protocol, whether media processing is required
- Network media processing configuration information: Whether 5G RTC client is equipped, whether media converter is supported and type, whether conferencing is supported
   - Media policy information: Supported codec and profile list, maximum/minimum bitrate per media stream, maximum/minimum bitrate per RTC media session, supportable transport protocol type and configuration information, etc.

The 5G RTC application provider according to an embodiment of the disclosure may determine a possible QoS step and charging for each QoS step through an agreement with the wireless communication service provider. The 5G RTC application provider may request a QoS configuration for the media stream transmitted in the 5G RTC media session from the PCF (or NEF) of the 5G CN through the 5G RTC AF based on the determined QoS step and charging. The QoS configuration for the media stream may be specified by QoS policy-related information included in the 5G RTC access information proposed in the disclosure. In this case, the 5G RTC AF may provide information for determining the media stream in the form of a service data flow description defined in 5G.

When the QoS policy-related information according to an embodiment of the disclosure includes the QoS-related information, the 5G RTC AF may request the QoS configuration from the PCF or the NEF through the Npcf_PolicyAuthorization service of the PCF or the Nnef_AFsessionWithQoS service of the NEF defined in the 3GPP TS 23.502. When the QoS policy-related information according to an embodiment of the disclosure includes the charging-related information, the 5G RTC AF may request the charging policy configuration from the PCF or the NEF through the Npcf_PolichAuthorization service of the PCF or the Nnef_ChargeableParty service of the NEF defined in the 3GPP TS 23.502. Optionally, the identifier of the 5G RTC application provider may be further included in the QoS policy-related information to provide sponsor information.

The 5G RTC AF according to an embodiment of the disclosure may extract information for determining the media stream from the service configuration information transmitted in the above-described 5G RTC signaling session, convert the same into the form of a service data flow description defined in 5G, and perform a server-based QoS configuration procedure for requesting the QoS configuration for the media stream from the 5GS.

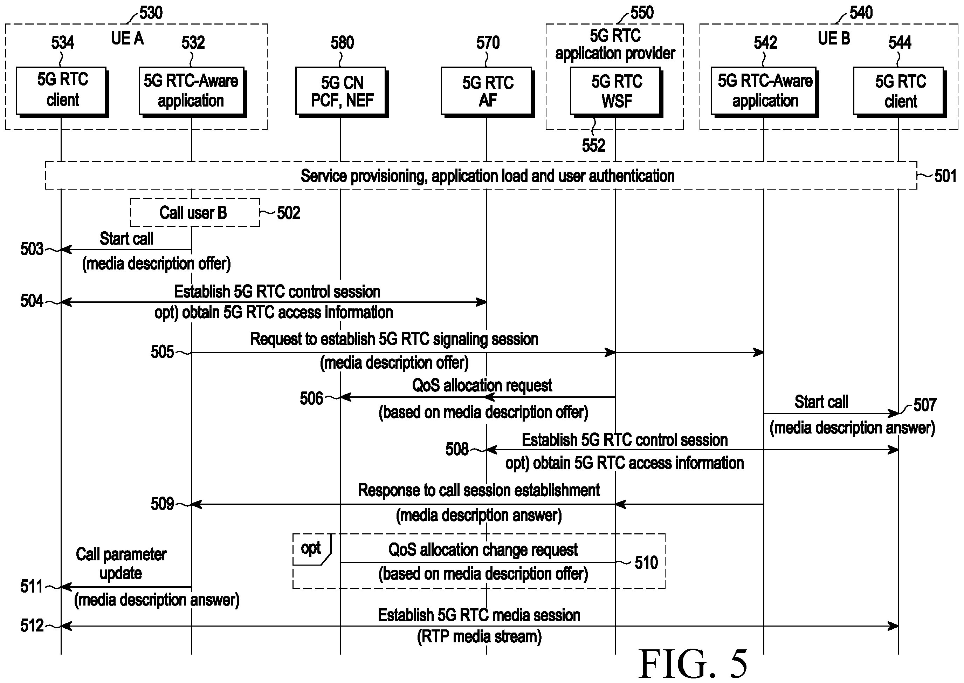

FIG. 5 illustrates a server-based QoS configuration procedure in a wireless communication system according to an embodiment of the disclosure.

Referring to FIG. 5, the media description offer refers to service configuration information proposed from the 5G RTCa application 532 of the UE A 530 to the 5G RTCa application 542 of the UE B 540, and a media description answer refers to service configuration information presented from the UE B 540 as a response to the media description offer. In the actual implementation, a process for identifying the answer and separate processes for optimizing the service configuration information negotiation procedure may further be included, but this may be regarded as a mere application of the disclosure and is omitted from the description. Further, it is assumed that the media description offer/answer includes a public transport address for transmission/reception for all media elements.

In step 501, service provisioning, 5G RTCa application acquisition and user authentication procedures of the UE A 530 and the UE B 540 may be performed. For example, step 501 may correspond to steps 301 and 302 of FIG. 3.

In step 502, the UE A 530 may generate a media description offer through the 5G RTCa application 532 and may request the UE B 540 to make a call.

In step 503, the 5G RTCa application 532 of the UE A 530 may notify the 5G RTC client 534 of the start of the call service and transfer the media description offer.

In step 504, the 5G RTC client 534 may configure an internal resource according to the media description offer and establish a 5G RTC control session with the 5G RTC AF 570. In an embodiment of the disclosure, step 504 may be performed before the media description offer is generated, and service configuration information for generating the media description offer may be obtained from the 5G RTC AF 570. Since the service provisioning as in step 501 is performed every relatively long period, when the service configuration information updated at a period shorter than the provisioning period is to be used, the 5G RTC client 534 may receive the service configuration information from the 5G RTC AF 570 through the 5G RTC control session, and may generate the media description offer using the received service configuration information.

In step 505, the 5G RTCa application 532 may transmit a call request including the media description offer to the 5G RTCa application 542 of the UE B 540 through the 5G RTC WSF 552.

In step 506, the 5G RTC WSF 552 may request the QoS configuration from the 5G CN (e.g., PCF or NEF) through the 5G RTC AF 570. The information for describing the QoS configuration request (e.g., media stream identification information and a corresponding supportable OoS level) may be extracted by the 5G RTC WSF or the 5G RTC AF from the media description offer.

In step 507, the UE B 540 may generate a media description answer corresponding to the media description offer through the 5G RTCa application 542, notify the 5G RTC client 544 of the start of the call service, and transfer the media description answer.

In step 508, the 5G RTC client 544 may configure an internal resource according to the media description offer and may establish a 5G RTC control session with the 5G RTC AF 570.

In step 509, the 5G RTCa application 542 of the UE B 540 may transmit a call request response including the media description answer to the 5G RTCa application 532 of the UE A 530 through the 5G RTC WSF 552.

Optionally, in step 510, when the QoS policy-related information (e.g., the supportable QoS levels) included in the media description offer and the media description offer are different from each other, the 5G RTC WSF 552 may request a QoS configuration change from the 5G CN (e.g., PCF or NEF) through the 5G RTC AF 570. Accordingly, the 5G CN may change the QoS configuration as requested. In this case, the information for describing the QoS configuration request may be extracted by the 5G RTC WSF 552 or the 5G RTC AF 570 from the media description offer.

In step 511, the 5G RTCa application 532 of the UE A 530 may instruct the 5G RTC client 534 to update a parameter based on the received media description answer.

In step 512, an RTC media session may be established between the 5G RTC client 534 of the UE A 530 and the 5G RTC client 544 of the UE B 540, and actual media data may be exchanged.

Optionally, when it is necessary to update the media description, the 5G RTCa application 532 of the UE A 530 may transfer a call update request including the updated media description to the 5G RTCa application 542 of the UE B 540 through the 5G RTC WSF 552, and the 5G RTC WSF 552 may request the 5G CN (e.g., PCF, NEF) to update the QoS configuration through the 5G RTC AF 570.

Optionally, the 5G RTC AF 570 may compare and identify media-related information included in the media description offer or answer with media policy information about service provisioning and may further perform a procedure of requesting to update the Qos configuration if necessary (e.g., when the media included in the offer or answer is not allowed by the provisioning media policy).

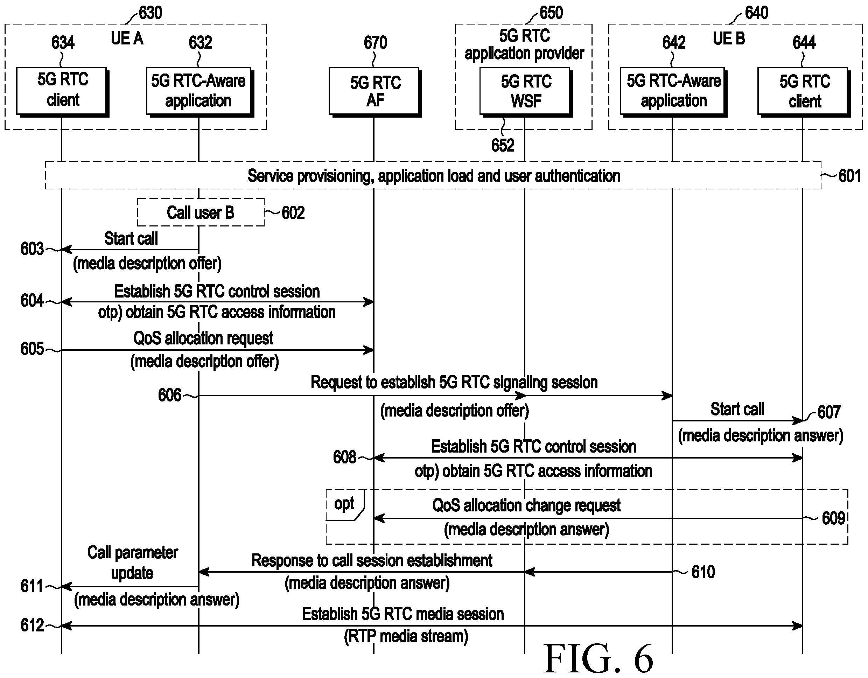

FIG. 6 illustrates a client-based QoS configuration procedure in a wireless communication system according to an embodiment of the disclosure.

The 5G RTC client 634 according to an embodiment of the disclosure may perform a client-based QoS configuration procedure for requesting a QoS configuration from the 5GS (e.g., PCF or NEF) through the 5G RTC AF 670 using the service configuration information (media description offer/answer) obtained from the 5G RTCa application 532.

Referring to FIG. 6, the media description offer refers to service configuration information proposed from the 5G RTCa application 632 of the UE A 630 to the 5G RTCa application 642 of the UE B 640, and the media description answer refers to service configuration information presented by the UE B 640 in response to the media description offer. In the actual implementation, a process for identifying the answer and separate processes for optimizing the service configuration information negotiation procedure may further be included, but this may be regarded as a mere application of the disclosure and is omitted from the description. Further, it is assumed that the media description offer/answer includes a public transport address for transmission/reception for all media elements.

In step 601, service provisioning, 5G RTCa application acquisition and authentication procedures of the UE A 630 and the UE B 640 may be performed. For example, step 601 may correspond to steps 301 and 302 of FIG. 3.

In step 602, the UE A 630 may generate a media description offer through the 5G RTCa application 632 and may request the UE B 640 to make a call.

In step 603, the 5G RTCa application 632 of the UE A 630 may notify the 5G RTC client 634 of the start of the call service and transfer the media description offer.

In step 604, the 5G RTC client 634 may configure an internal resource according to the media description offer and establish a 5G RTC control session with the 5G RTC AF 670. In an embodiment of the disclosure, step 604 may be performed before the media description offer is generated, and service configuration information for generating the media description offer may be obtained from the 5G RTC AF 670. Since the service provisioning as in step 601 is performed every relatively long period, when the service configuration information updated at a period shorter than the provisioning period is to be used, the 5G RTC client 634 may receive the service configuration information from the 5G RTC AF 670 through the 5G RTC control session, and may generate the media description offer using the received service configuration information.

In step 605, the 5G RTC client 634 may request the QoS configuration from the 5G RTC AF 570. The 5G RTC AF 570 may request the QoS configuration from the 5G CN (e.g., PCF, NEF). The information for describing the QoS configuration request (e.g., media stream identification information and a corresponding supportable OoS level) may be extracted by the 5G RTC client 634 or the 5G RTC AF 670 from the service configuration information.

In step 606, the 5G RTCa application 632 may transmit a call request including the media description offer to the 5G RTCa application 642 of the UE B 640 through the 5G RTC WSF 652.

In step 607, the UE B 640 may generate a media description answer corresponding to the media description offer through the 5G RTCa application 642, notify the 5G RTC client 644 of the start of the call service, and transfer the media description answer.

In step 608, the 5G RTC client 644 may configure an internal resource according to the media description offer and may establish a 5G RTC control session with the 5G RTC AF 670.

Optionally, in step 609, when the QoS policy-related information (e.g., the supportable QoS levels) included in the media description offer and the media description offer are different from each other, the 5G RTC client 644 may request a QoS configuration change from the 5G RTC AF 670. The 5G RTC AF 670 may request a QoS configuration change from the 5G CN (e.g., PCF, NEF). The information for describing the QoS configuration request (e.g., media stream identification information and a corresponding supportable OoS level) may be extracted by the 5G RTC client 644 or the 5G RTC AF 670 from the service configuration information.

In step 610, the 5G RTCa application 642 of the UE B 640 may transmit a call request response including the media description answer to the 5G RTCa application 632 of the UE A 630 through the 5G RTC WSF 652.

In step 611, the 5G RTCa application 632 of the UE A 630 may instruct the 5G RTC client 634 to update a parameter based on the received media description answer.

In step 612, an RTC media session may be established between the 5G RTC client 634 of the UE A 630 and the 5G RTC client 644 of the UE B 640, and actual media data may be exchanged. The client-based QoS configuration procedure according to an embodiment of the disclosure may be used to change the QoS configuration without changing the service configuration information.

The QoS policy-related information included in the 5G RTC access information according to an embodiment of the disclosure may further include a detailed parameter and whether the above-described server-based QoS configuration procedure or client-based QoS configuration procedure may be supported.

The media description offer/answer according to an embodiment of the disclosure may include a transport layer address candidate(s) for transmission/reception for all media elements. This means that the 5G RTCa application of the UE may request the counterpart UE to establish a 5G RTC signaling session before accurately identifying the public address of the counterpart UE or the transmission address of the relay. The mapping of the public transport address for each media element may be confirmed before the actual media data transmission starts through a separate message exchange using the 5G RTC signaling session.

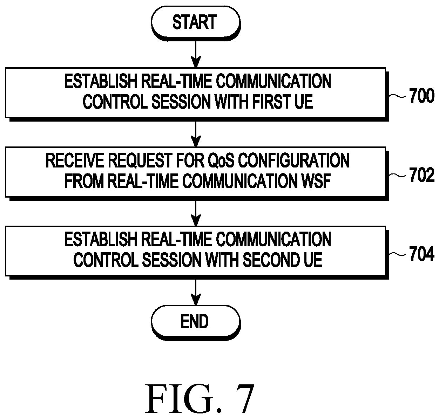

FIG. 7 is a view illustrating a real-time communication supporting method of an RTC AF according to an embodiment of the disclosure.

The method illustrated in FIG. 7 may be described with reference to the real-time communication (RTC) AF of FIG. 5 supporting the real-time communication service to the first UE and the second UE.

The RTC AF may establish a real-time communication control session with the first UE (700).

The RTC AF may receive a QoS configuration request from the RTC WSF (702). The QoS configuration request may be generated based on a media description offer received from the first UE.

The RTC AF may establish a real-time communication control session with the second UE (704).
the request for the QoS configuration is transmitted to a policy control function (PCF) or network exposure function (NEF) of a 5G core network (CN).

Optionally, it may further perform an operation of receiving a request for changing the QoS configuration from the RTC WSF and transmitting the QoS configuration change request to the PCF or NEF of the 5G CN.

The request for the QoS configuration may include identification information about a media stream for the real-time communication service and QoS level information supportable in the media stream.

The media description offer may include service configuration information provided in a service provisioning process. The service configuration information may include real-time communication access information. The real-time communication access information may include QoS policy-related information described above in the disclosure.

According to the implementation, the RTC AF may not be introduced into the communication system, and the RTC AF may be implemented to be mounted on the RTC WSF. When the RTC AF is not introduced or is mounted on the RTC WSF as described above, all of the operations performed by the RTC AF may be performed by the RTC WSF.

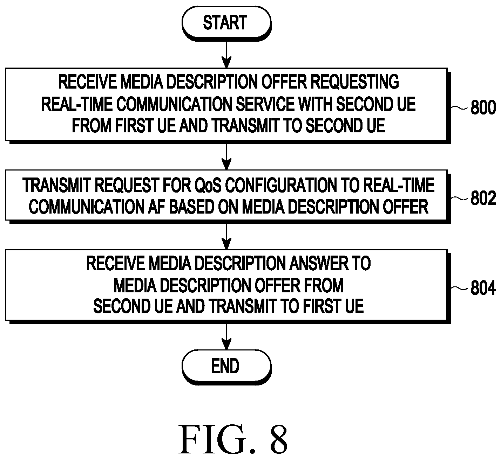

FIG. 8 is a view illustrating a real-time communication supporting method of an RTC WSF according to an embodiment of the disclosure.

The method illustrated in FIG. 8 may be described with reference to the real-time communication (RTC) WSF of FIG. 5 supporting the real-time communication service to the first UE and the second UE.

The RTC WSF may receive a media description offer requesting the real-time communication service with the second UE from the first UE and transmit the media description offer to the second UE (800).

The RTC WSF may transmit a request for QoS configuration to the RTC AF based on the media description offer (802). The request for the QoS configuration may be transmitted to the PCF or NEF of the 5G CN. Alternatively, the RTC WSF may directly transmit the request for QoS configuration to the PCF or NEF of the 5G CN.

The RTC WSF may receive a media description answer to the media description offer from the second UE and transmit the media description answer to the first UE (804).

Optionally, the RTC WSF may further perform the operation of transmitting a request for a QoS configuration change to the RTC AF when QoS policy-related information included in the media description offer differs from QoS policy-related information included in the media description answer.

The request for the QoS configuration may include identification information about a media stream for the real-time communication service and QoS level information supportable in the media stream.

The media description offer may include service configuration information provided in a service provisioning process. The service configuration information may include real-time communication access information. The real-time communication access information may include QoS policy-related information described above in the disclosure.

According to the implementation, the RTC WSF may not be introduced into the communication system, and the RTC WSF may be implemented to be mounted on the RTC AF. When the RTC WSF is not introduced or is mounted on the RTC AF as described above, all of the operations performed by the RTC WSF may be performed by the RTC AF.

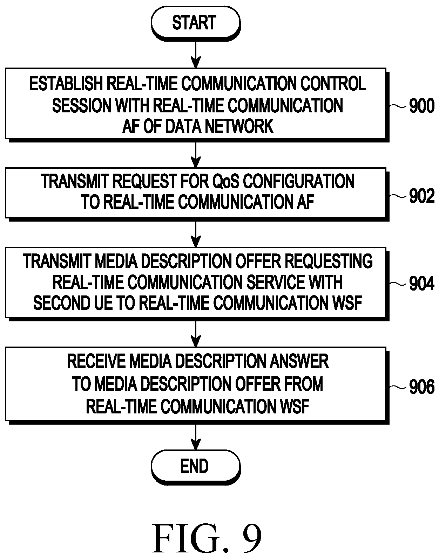

FIG. 9 is a view illustrating a real-time communication service performing method of a first UE according to an embodiment of the disclosure.

The method illustrated in FIG. 9 may be described with reference to the first UE 630 of FIG. 6 that performs a real-time communication service with the second UE 640.

The first UE may establish a real-time communication control session with the RTC AF of the data network (900).

The first UE may transmit a QoS configuration request to the RTC AF (902).

The first UE may transmit a media description offer for requesting a real-time communication service with the second UE to the RTC WSF (904).

The first UE may receive a media description answer to the media description offer from the RTC WSF (906).

The request for QoS configuration may be generated based on the media description offer. The request for the QoS configuration may include identification information about a media stream for the real-time communication service and QoS level information supportable in the media stream.

According to the implementation, the RTC AF may not be introduced into the communication system, and the RTC AF may be implemented to be mounted on the RTC WSF. When the RTC AF is not introduced or is mounted on the RTC WSF as described above, all of the operations performed by the first UE with the RTC AF may be performed with the RTC WSF.

According to the implementation, the RTC WSF may not be introduced into the communication system, and the RTC WSF may be implemented to be mounted on the RTC AF. When the RTC WSF is not introduced or is mounted on the RTC AF as described above, all of the operations performed by the first UE with the RTC WSF may be performed with the RTC AF.

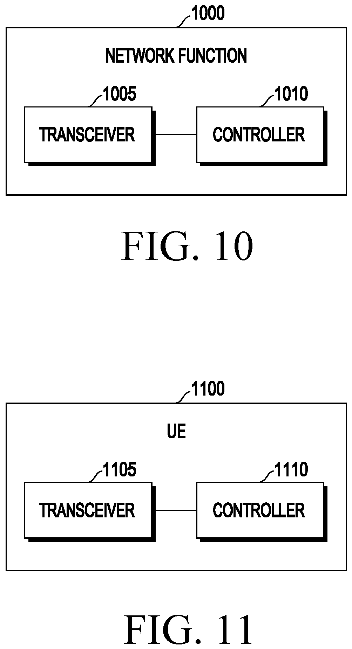

FIG. 10 is a view illustrating a configuration of a network function device according to an embodiment of the disclosure.

The network function device of FIG. 10 describes device configurations of various network functions described in the disclosure. For example, network function devices, such as the RTC AF and RTC WSF illustrated in FIGS. 3 to 6 may include the configuration of FIG. 10.

The network function device 1000 may include a transceiver 1005 performing signal transmission/reception with another network function or a UE and a controller 1010 controlling all operations of the network function device 1000. All of the methods performed by the above-described RTC AF or the RTC WSF in the disclosure may be understood as being performed under the control of the controller 1010.

The controller 1010 and the transceiver 1005 are not necessarily implemented as separate devices, respectively, but may be implemented in a single configuration unit in the form of, e.g., a single chip.

The controller 1010 may be implemented, as one processor, in the network function device 1000.

FIG. 11 is a view illustrating a configuration of a UE according to an embodiment of the disclosure.

The UE 1100 may include a transceiver 1105 performing signal transmission/reception with another UE or network function and a controller 1110 controlling all operations of the UE 1100. All of the methods performed by the above-described UE in the disclosure may be understood as being performed under the control of the controller 1110. For example, the 5G RTCa applications 532 and 542 and the 5G RTC clients 534 and 544 of FIG. 5 may be implemented under the control of the controller 1110.

The controller 1110 and the transceiver 1105 are not necessarily implemented as separate devices, respectively, but may be implemented in a single configuration unit in the form of, e.g., a single chip.

The controller 1110 may be implemented, as one processor, in the UE 1100.

It should be noted that the methods and device or system configurations shown in FIGS. 1 to 11 are not intended to limit the scope of the present invention. In other words, all the configurations or operations illustrated in FIGS. 1 to 11 should not be construed as essential components to practice the present invention, and the present invention may be rather implemented with only some of the components without departing from the gist of the present invention.

The methods according to the embodiments described in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

The embodiments herein are provided merely for better understanding of the present invention, and the present invention should not be limited thereto or thereby. In other words, it is apparent to one of ordinary skill in the art that various changes may be made thereto without departing from the scope of the disclosure. Further, the embodiments may be practiced in combination. For example, the network function, base station and the UE may be operated in a combination of parts of an embodiment and another embodiment. Embodiments of the disclosure may be applied to other communication systems, and various modifications may be made thereto based on the technical spirit of embodiments.

## Claims

1. A method for supporting a real-time communication service between a first UE and a second UE in a real-time communication application function (AF) of a data network, the method comprising:
establishing a real-time communication control session with the first UE;
receiving, from a real-time communication web server function (WSF) providing the real-time communication service to the first UE and the second UE, a request for a quality of service (QoS) configuration; and
establishing a real-time communication control session with the second UE,
wherein the request for the QoS configuration is generated, based on a media description offer received from the first UE.

2. The method of claim 1, further comprising:
transmitting, to a policy control function (PCF) or network exposure function (NEF) of a 5G core network (CN), the request for the QoS configuration.

3. The method of claim 1, wherein the request for the QoS configuration includes identification information about a media stream for the real-time communication service and QoS level information supportable in the media stream.

4. The method of claim 1, wherein the media description offer includes service configuration information provided in a service provisioning process.

5. The method of claim 1, wherein the media description offer includes real-time communication access information provided in a service provisioning process.

6. The method of claim 1, further comprising:
receiving, from the WSF, a request for a QoS configuration change; and
transmitting, to a policy control function (PCF) or network exposure function (NEF) of a 5G core network (CN), the request for the QoS configuration change.

7. A method for supporting a real-time communication service between a first UE and a second UE in a real-time communication web server function (WSF) of a data network, the method comprising:
receiving, from the first UE, a media description offer requesting the real-time communication service with the second UE, and transmitting, to the second UE, the media description offer;
transmitting, to a real-time communication application function (AF), a request for a quality of service (QoS) configuration based on the media description offer; and
receiving, from the second UE, a media description answer to the media description offer, and transmitting, to the first UE, the media description answer.

8. The method of claim 7, wherein the request for the QoS configuration is transmitted to a policy control function (PCF) or network exposure function (NEF) of a 5G core network (CN).

9. The method of claim 7, wherein the request for the QoS configuration includes identification information about a media stream for the real-time communication service and QoS level information supportable in the media stream.

10. The method of claim 7, wherein the media description offer includes service configuration information provided in a service provisioning process.

11. The method of claim 7, wherein the media description offer includes real-time communication access information provided in a service provisioning process.

12. The method of claim 7, further comprising
transmitting, to the real-time communication AF, a request for a QoS configuration change in case that QoS policy-related information included in the media description offer differs from QoS policy-related information included in the media description answer.

13. A real-time communication application function (AF) device of a data network supporting a real-time communication service between a first UE and a second UE, comprising:
a transceiver; and
a controller controlling the transceiver to:
establish a real-time communication control session with the first UE,
receive, from a real-time communication web server function (WSF) providing the real-time communication service to the first UE and the second UE, a request for a quality of service (QoS) configuration, and
establish a real-time communication control session with the second UE,
wherein the request for the QoS configuration is generated based on a media description offer received from the first UE.

14. A real-time communication web server function (WSF) device of a data network supporting a real-time communication service between a first UE and a second UE, comprising:
a transceiver; and
a controller controlling the transceiver to:
receive, from the first UE, a media description offer requesting the real-time communication service with the second UE, and transmit, to the second UE, the media description offer,
transmit, to a real-time communication application function (AF), a request for a quality of service (QoS) configuration based on the media description offer, and
receive, from the second UE, a media description answer to the media description offer, and transmit, to the first UE, the media description answer.
